# EUROPÄISCHE PATENTANMELDUNG

(11) **EP 3 926 101 A1**
(43) Veröffentlichungstag der Anmeldung: **22.12.2021**
(21) Anmeldenummer: 21178534.0
(22) Anmeldetag: 09.06.2021
(51) Int. Cl.: E02D 31/00, B09B 1/00, E02B 3/16, E02D 17/10

(54) **POLYISOBUTEN-BASIERTE ERDREICHABDICHTUNG MIT DICHT- UND SCHLITZWÄNDEN ODER IN VOLLFLÄCHIGEM KONTAKT**

(30) Priorität: 15.06.2020 DE 102020115685
(71) Anmelder: BASF SE, 67056 Ludwigshafen am Rhein (DE)
(72) Erfinder: Fidorra, Uwe, 67157 Wachenheim (DE)
(74) Vertreter: Hörschler, Wolfram Johannes

(57) **Zusammenfassung**

Die Erfindung bezieht sich auf eine Polyisobuten-basierte Abdichtung (14, 42) und/oder eine Polyisobuten-basierte Versiegelung (16) bestehender oder neu anzulegender Deponien (30), kontaminierter Flächen oder Bauwerke wie Baugruben, ins Erdreich verlegte Bauten, Stollen oder Tunnel, bergmännische Einrichtungen zum Schutz vor Kontakt mit oder Zufluss von Grundwasser und/oder Oberflächenwasser, vor Austritt schädlicher Gase und/oder vor Kontaminierungen.

Um ein gegen eindringendes Grundwasser und/oder Oberflächenwasser zu schützendes Objekt (30, 32) in einem Abstand angeordnete Dicht- oder Schlitzwände (42) sind mit Polyisobuten (20, 24) oder mit Polyisobuten (20, 24) enthaltendem Material verfüllt und/oder eine Oberfläche (12) von Erdreich (10) ist mit einem zumindest eine Schicht (18, 22) aus Polyisobuten (20, 24) oder einem Polyisobuten (20, 24) enthaltendem Material als Versiegelung (16) versehen. Des Weiteren bezieht sich die Erfindung auf die Verwendung der Polyisobuten-basierten Abdichtung (14, 42) und/oder der Polyisobuten-basierten Versiegelung (16) zur Abdichtung und/oder Versiegelung bestehender oder neu anzulegender Deponien (30), kontaminierter Flächen oder Bauwerke, im Erdreich liegender Gebäudeteile oder sonstiger zu schützenden Objekte, die mittels Dicht-/Schlitzwänden (42) oder mittels direktem, vollflächigem Kontakt mit Polyisobuten oder Polyisobuten enthaltendem Material vor dem Kontakt mit oder dem Zufluss von Grundwasser und/oder Oberflächenwasser zu schützen sind, sowie durch Polyisobuten-basierte Versiegelung (16) von Oberflächen vor dem Zutritt von Wasser wie beispielsweise Niederschlag und dem unkontrollierten Austritt schädlicher Gase.

## Beschreibung

### Technisches Gebiet

Die Erfindung bezieht sich auf eine Erdreich-Abdichtung und/oder Versiegelung von bestehenden oder neu anzulegenden Deponien, kontaminierten Flächen oder bestehenden und neu anzulegenden Bauwerken, die mittels der Verwendung von Polyisobuten in Dicht- und/oder Schlitzwänden vor dem Kontakt mit beziehungsweise dem Zufluss von Grund- und/oder Oberflächenwasser zu schützen sind sowie durch Oberflächenversiegelung vor dem Zutritt von Flüssigkeiten z.B. Regenniederschlag und unkontrolliertem Austritt von Kontaminationen und schädlichen Gasen in die Umwelt. Beispiele für Bauwerke sind: Baugruben, ins Erdreich verlegte Bauten wie beispielsweise Tiefgaragen, Keller, Tunnel, U-Bahn-Schächte oder U-Bahn-Röhren, bergmännische Betriebe im Übertage- und Untertagebau.

### Stand der Technik

Abdichtungen und/oder Versiegelungen hin zum beziehungsweise gegen Zufluss von Grund- und/oder Oberflächenwasser stellen enorme technische Herausforderungen dar. Abdichtungen und/oder Versiegelungen innerhalb des Erdreichs beziehungsweise im Untergrund dienen der weitestgehenden und/oder allseitigen Abschirmung von Grund- und Oberflächenwasser und Gasen sowie zur Verhinderung von Zufluss und Kontaminierungen des (Grund-)Wassers sowie der umgebenden Böden.

Es existieren Deponien und kontaminierte Flächen oder Böden, auf denen sogenannte "Altlasten" vorhanden sind. Neue beziehungsweise anzulegende über- und unterirdische Deponien, insbesondere mit Schadstoffen inklusive flüchtigen Schadstoffen, belasten die Umwelt beziehungsweise können dem Grundwasser gefährlich werden. Gleiches gilt für im Betrieb befindliche und ehemalige Industriegelände mit aufgrund von Betriebsunfällen oder Einwirkung von höherer Gewalt kontaminierten Böden.

Bei Bauwerken kommen solche infrage, die durch sie umschließende Dicht-/Schlichtwände abgeschirmt und somit vor zufließendem Grundwasser geschützt werden können. Hier spielt die Frage der Kontamination weniger eine Rolle. Beispiele für solche vor Wasserzufluss zu schützende Bauwerke sind Baugruben, im Tiefbau erstellte oder ins Erdreich verlegte Bauten, wie beispielsweise Tiefgaragen, Keller, Tunnel, etc. sowie bergmännische Betriebe im Über- und Untertagebau.

Heute im Allgemeinen eingesetzte gängige Verfahren, zum Beispiel im Rahmen der Altlastensanierungen, arbeiten überwiegend mit dem Einbringen von Zementschlämmen oder von Beton. Nachteilig dabei ist unter anderem der relativ hohe Arbeitsaufwand bei der Herstellung dieser Schlämme sowie die großen notwendigen Dichtwandbreiten, ferner aufwändige Qualitätssicherungsuntersuchungen, die Anfälligkeit gegen Säuren und die letztlich nicht vollständig abdichtende Wirkung.

### Darstellung der Erfindung

Der vorliegenden Erfindung liegt die Aufgabe zugrunde, bestehende oder neu anzulegende Deponien und kontaminierte Flächen sowie Bauwerke im allgemeinsten Sinne, die sich ganz oder teilweise über Tage und ganz oder teilweise unter Tage befinden, gegen Eindringen von Grund- und/oder Oberflächenwasser wirksam zu schützen, sodass Kontaminationen des umgebenden Erdreichs oder des Grundwassers oder des Oberflächenwassers ausgeschlossen sind.

Erfindungsgemäß wird eine Polyisobuten-basierte Abdichtung und/oder eine Polyisobuten-basierte Versiegelung bestehender oder neu anzulegender Deponien, kontaminierter Flächen, Bauwerke oder Baugruben, ins Erdreich verlegter Bauten, bergmännischer Einrichtungen vor Kontakt mit oder Zufluss von Grundwasser und/oder Oberflächenwasser, vor Austritt schädlicher Gase und/oder Kontaminierungen vorgeschlagen, bei der um ein gegen eindringendes Grundwasser und/oder Oberflächenwasser zu schützendes Objekt in einem Abstand angeordnete Dicht- oder Schlitzwände mit Polyisobuten oder mit Polyisobuten enthaltendem Material verfüllt sind und/oder eine Oberfläche von Erdreich mit einem zumindest eine Schicht aus Polyisobuten oder einem Polyisobuten enthaltendem Material als Polyisobuten-basierte Versiegelung versehen ist oder im Erdreich liegende Gebäudeteile oder unterirdische Bauwerke oder Deponien und Lagerstätten radioaktiven Materials und deren Behältnisse in direktem, vollflächigem Kontakt mit Polyisobuten oder Polyisobuten enthaltendem Material stehen.

Durch die erfindungsgemäß vorgeschlagene Lösung kann eine in-situ-Kapselung bestehender Deponien erreicht werden und verhindert werden, dass Deponien von Grundwasser oder Niederschlagswasser durchspült werden und es somit zu einer Kontamination des umgebenden Erdreichs durch ausgeschwemmte Schadstoffe oder Chemikalien kommen kann.

In weiterer Ausgestaltung der erfindungsgemäß vorgeschlagenen Lösung ist die Polyisobuten-basierte Abdichtung und/oder die Polyisobuten-basierte Versiegelung so beschaffen, dass anstehendes Erdreich beziehungsweise Boden aufgebrochen und umgelagert ist und Porenräume mit Polyisobuten oder Polyisobuten enthaltendem Material verfüllt sind. Die Porenräume der aufgebrochenen und umgelagerten Erde dienen somit als Füllstellen für das Polyisobuten, sodass unmittelbar im angrenzenden Erdreich eine Barriere gebildet werden kann.

In vorteilhafter Weiterbildung der erfindungsgemäß vorgeschlagenen Lösung ist die Polyisobuten-basierte Abdichtung und/oder die Polyisobuten-basierte Versiegelung so beschaffen, dass die Abdichtung beziehungsweise die Versiegelung einer Oberfläche oder bei neu anzulegenden Deponien die Sohle und die Seitenwände derselben im Ein-Schicht-Auftrag oder im Mehr-Schicht-Auftrag ausgeführt sind und somit eine Deponieauskleidung bilden.

In vorteilhafter Weiterbildung der erfindungsgemäß vorgeschlagenen Polyisobuten-basierten Abdichtung und/oder der Polyisobuten-basierten Versiegelung umfasst der Ein-Schicht-Auftrag eine Schicht mit Polyisobuten niedrigen Molekulargewichts oder eine Schicht mit Polyisobuten hohen Molekulargewichts oder alternativ eine Schicht mit einem mit Polyisobuten niedrigen Molekulargewichts versetzten Material oder eine Schicht mit einem mit Polyisobuten hohen Molekulargewichts versetzten Material. Durch die jeweils angewendeten Auftragsformen, Ein-Schicht-Auftrag oder Mehr-Schicht-Auftrag, können lokale Gegebenheiten berücksichtigt werden und das Material Polyisobuten entsprechend seiner gewünschten Eigenschaften entweder mit hohem oder mit niedrigem Molekulargewicht eingesetzt werden.

In vorteilhafter Weiterbildung der erfindungsgemäß vorgeschlagenen Lösung ist die Polyisobuten-basierte Abdichtung und/oder die Polyisobuten-basierte Versiegelung derart ausgebildet, dass der Mehr-Schicht-Auftrag zumindest eine erste Schicht aus Polyisobuten niedrigen Molekulargewichts oder aus Polyisobuten höheren Molekulargewichts umfasst und eine zweite darüber liegende Schicht mit einem Polyisobuten niedrigen Molekulargewichts versetztes Material oder ein mit einem Polyisobuten hohen Molekulargewichts versetztes Material umfasst.

In vorteilhafter Weiterbildung der erfindungsgemäß vorgeschlagenen Lösung umfasst der Mehr-Schicht-Auftrag mindestens eine erste Schicht mit einem mit Polyisobuten niedrigen Molekulargewichts versetztem Material und eine Schicht mit einem mit Polyisobuten höheren Molekulargewichts versetzten Material.

Bei der erfindungsgemäß vorgeschlagenen Lösung ist die Polyisobuten-basierte Abdichtung und/oder die Polyisobuten-basierte Versiegelung derart beschaffen, dass auf der Oberfläche des Erdreichs die erste Schicht mit Polyisobuten niedrigeren Molekulargewichts und auf der ersten Schicht mindestens eine weitere zweite Schicht mit einem mit Polyisobuten höheren Molekulargewichts versetzten Material aufgebracht ist. Dadurch kann in vorteilhafter Weise bereits durch die erste Schicht in dem darunter liegenden Erdreich eine zusätzliche Sperre erhalten werden. Ist hingegen bei einem derartig ausgebildeten zweischichtigen Aufbau ein entsprechend hochviskoses Polyisobuten im Einsatz, das zum Beispiel zum Auftrag erwärmt werden kann, ist durchaus auch ein einschichtig ausgebildeter Aufbau einer derartigen Barriere beziehungsweise Sperre möglich. In vorteilhafter Weiterbildung der erfindungsgemäß vorgeschlagenen Lösung ist die Polyisobuten-basierte Abdichtung und/oder die Polyisobuten-basierte Versiegelung so ausgeführt, dass die auf das Erdreich aufgebrachte erste Schicht Polyisobuten mit niedriger Viskosität und die über dieser liegende weitere zweite Schicht Polyisobuten mit hoher Viskosität aufweist. Aufgrund der niedrigeren Viskosität der zuerst auf das Erdreich aufgetragenen Schicht, kann bereits dort das unter dieser liegende Erdreich ausgefüllt werden und somit eine zusätzliche Sperre für das danach aufgetragene Polyisobuten mit höherer Viskosität gemäß der zweiten Schicht erhalten werden.

In einer weiteren besonders vorteilhaften Ausgestaltung der Polyisobuten-basierten Abdichtung und/oder der Polyisobuten-basierten Versiegelung sind die Dicht-/Schlitzwände in einer Bodentiefe ausgeführt, die sich bis zu einer wassersperrenden Bodenschicht in das Erdreich erstreckt, und insbesondere in diese wassersperrende Bodenschicht eingebunden. Dadurch entsteht sozusagen eine Verkapselung des zu schützenden Objekts, beispielsweise einer Deponie, da deren Deponieauskleidung allseitig von Polyisobuten umgeben ist, wodurch eine Durchspülung mit Grund- oder Oberflächenwasser definitiv ausgeschlossen ist.

In einer weiteren vorteilhaften Ausgestaltung der Polyisobuten-basierten Abdichtung und/oder der Polyisobuten-basierten Versiegelung wird die Dicht-/Schlitzwand durch eine Vielzahl von in das Erdreich vertikal abgeteufter, nebeneinander liegend und teilweise einander überlappender Bohrungen gebildet, die eine durchgehende Dichtwand bilden. Der Vorteil einer derartigen Ausbildung liegt in der Herstellung der Dichtwand, nämlich dass diese abhängig von der Fläche, die das zu schützende Objekt einnimmt, individuell gestaltet werden kann und Anpassungen an dessen Geometrie möglich sind.

In einer weiteren Ausführungsvariante der erfindungsgemäß vorgeschlagenen Polyisobuten-basierten Abdichtung und/oder der Polyisobuten-basierten Versiegelung kann die Dicht-/Schlitzwand durch eine Fächerbohrung mit einem ersten Fächerbohrungsteil und einem zweiten Fächerbohrungsteil gebildet sein, die sich unterhalb des stützenden Objekts in einem Spreizungswinkel bis zur Oberfläche des Erdreichs erstrecken und somit eine Sohlen- und Seitenwandabdichtung, beispielsweise einer Deponie oder eines anderen Bauwerks, bilden.

Bei der erfindungsgemäß vorgeschlagenen Lösung kann in vorteilhafter Weise die Polyisobuten-basierte Abdichtung und/oder die Polyisobuten-basierte Versiegelung so beschaffen sein, dass die Bohrungen, welche die Fächerbohrungsteile darstellen, mit einem Polyisobuten niedrigen Molekulargewichts enthaltenden Material oder mit einem Polyisobuten höheren Molekulargewichts enthaltenden Material verfüllt sind.

Bei der erfindungsgemäß vorgeschlagenen Lösung sind die Bohrungen derart in das Erdreich abgeteuft, dass die Bohrungen und um diese anstehender Boden entsprechend der Bohrtiefe unter Einbindung in die wassersperrende Bodenschicht mit einem mit Polyisobuten niedrigen Molekulargewichts versetztem Material oder mit einem mit Polyisobuten hohen Molekulargewichts versetztem Material verfüllt sind; beziehungsweise mit Bodengemischen, die mit entsprechenden Polyisobutenen in-situ hergestellt worden sind.

In weiterer Ausgestaltung der Polyisobuten-basierten Abdichtung und/oder Polyisobuten-basierten Versiegelung ist diese im Ein-Schicht-Auftrag oder im Mehr-Schicht-Auftrag oder als aufgespritzte, Polyisobuten-enthaltende Schicht oder als vorgefertigtes Bauelement mit mindestens einer Polyisobuten-enthaltenden Schicht auf mit Erdreich oder Boden einer verfüllten Baugrube in Kontakt stehenden unterirdischen Gebäudeteilen oder Bauwerken aufgebracht.

In weiterer Ausgestaltung dieser Ausführungsvariante ist an unterirdischen Gebäudeteilen oder an Gebäuden angrenzendes Erdreich mit Polyisobuten versetzt, insbesondere entweder gemischt oder getränkt.

In vorteilhafter Ausgestaltung dieser Ausführungsvariante können die vorgefertigten Bauelemente mit mindestens einer Polyisobuten-enthaltenden Schicht eine Trägerschicht enthalten, die als Platte, als Rollbahn, als Folie, als Bandage oder als Matte ausgeführt sein kann.

Die vorstehend erwähnten vorgefertigten Bauteile mit mindestens einer Polyisobuten enthaltenden Schicht können als Kreisbogensegmente oder auch als ebene Flächen ausgeführt sein.

Darüber hinaus bezieht sich die Erfindung auf ein Verfahren zur Herstellung einer Polyisobuten-basierten Abdichtung und/oder einer Polyisobuten-basierten Versiegelung, wobei das Polyisobuten eines niedermolekularen, mittelmolekularen oder hochmolekularen Polymerisationsgrads als Feststoff, in flüssigem Zustand, als Dispersion oder als Suspension zur Abdichtung und zur Versiegelung eingesetzt wird.

Gemäß diesem Verfahren kann das Polyisobuten im Mehr-Schicht-Auftrag aufgebracht werden, derart, dass die erste Schicht niedrigerviskosen Polyisobutens niedrigeren Molekulargewichts in das umgebende Erdreich eindringt und eine erste Sperre bildet. In Weiterbildung des erfindungsgemäß vorgeschlagenen Verfahrens wird eine zweite Schicht Polyisobuten mit höherer Viskosität und höherem Molekulargewicht auf die zuvor aufgetragene erste Schicht aufgebracht.

Darüber hinaus bezieht sich die Erfindung auf die Verwendung der Polyisobuten-basierten Abdichtung und/oder der Polyisobuten-basierten Versiegelung zur Abdichtung und/oder Versiegelung bestehender oder neu anzulegender Deponien, kontaminierter Flächen oder Bauwerke, Baugruben, ins Erdreich verlegter Bauten wie Tiefgaragen, Keller, Tunnel, U-Bahn-Schächte, U-Bahn-Röhren, bergmännischer Betriebe im Über- oder Untertagebau, die mittels Dicht-/Schlitzwänden vor dem Kontakt mit beziehungsweise dem Durchfluss von Grund- und/oder Oberflächenwasser zu schützen sind, sowie durch Oberflächenversiegelung vor dem Austritt schädlicher Gase.

Darüber hinaus bezieht sich die Erfindung auf die Verwendung der Polyisobuten-basierten Abdichtung oder Polyisobuten-basierten Versiegelung zur Kapselung von Deponien und Lagerstätten radioaktiven Materials und deren Behältnisse in geologischen Formationen.

### Vorteile der Erfindung

Beim erfindungsgemäß vorgeschlagenen Verfahren können kostenintensive gängige Verfahren reduziert beziehungsweise optimiert werden. Es kann beispielsweise eine sehr aufwendige und umfangreiche Vorarbeiten erfordernde Grundwasserabsenkung vermieden werden. Je nach Bodenbeschaffenheit können bewehrte Schlitzwände eingespart werden, ferner können Vereisungen, die beispielsweise mittels Wärmetauschern erzeugt werden, umgangen werden. Bei Kontaminationen kann verhindert werden, dass es zu einer Auskofferung mit anschließendem Verbringen des kontaminierten Erdreichs auf Deponien oder zu Bodenwaschvorgängen kommt.

Im Vergleich zu den meisten obenstehend genannten bisherigen Abhilfen, kann eine wesentlich kürzere Herstellzeit durch Anwendung des erfindungsgemäß vorgeschlagenen Verfahrens mit Polyisobuten oder einer Polyisobuten enthaltenden Formulierung und eine sofortige Wirkung unmittelbar nach dem Eindringen erreicht werden. Da die erforderliche Maschinentechnik bereits vorhanden ist, wäre diese lediglich geringfügig zu modifizieren, insbesondere für in-situ-Anwendungen. Der Abdichtungserfolg ist aufgrund der bekannten Eigenschaften von Polyisobuten immanent. Zu den hervorragenden Eigenschaften des erwähnten Materials sind unter anderem zu zählen, dass dieses absolut dicht gegenüber Flüssigkeiten und/oder Gasen ist und ein hydrophobes Verhalten aufweist. Ferner ist Polyisobuten auch beständig gegen Wärme und Kälte, insbesondere beständig gegen Temperaturschwankungen, wie sie bei Anwendungen im Freien auftreten. Des Weiteren zeichnet sich Polyisobuten oder eine Polyisobuten enthaltende Formulierung durch eine hohe Chemikalienbeständigkeit aus, ferner weist Polyisobuten eine Füllmittelaffinität auf. Darüber hinaus ist es elektrisch nicht leitend.

Polyisobuten kann in niedermolekularem Polymerisationsgrad, d. h. in flüssigem Zustand, oder auch in einem hochmolekularen Polymerisationsgrad, d. h. fest, verarbeitet werden. Es ist inert und weist dadurch keine nachteiligen Umweltauswirkungen auf. Ferner bestehen Zulassungen der FDA in den USA und es liegt ein breites Anwendungsspektrum vor. Aufgrund ausgezeichneter adhäsiver und kohäsiver Klebeeigenschaften ist Polyisobuten als Abdichtungsmittel verwendbar, so beispielsweise für Dächer, sowie für Pressure Sensitive Adhesives (Pflaster) und "selbstheilend".

Es ist hervorzuheben, dass sich Polyisobuten für einen sehr weiten Bereich unterschiedlicher Bodenqualitäten anbietet. Insbesondere entfällt das Erfordernis des Abtransportierens von Bodenmaterial, zum Beispiel ausgekofferter Aushub. Des Weiteren ist Polyisobuten erdbebensicher und aufgrund von selbstständigem Wiederverschließen im Falle des Auftretens von Beschädigung äußerst geeignet zur Erfüllung von Abdicht- beziehungsweise Versiegelungsfunktionen. Des Weiteren ist hervorzuheben, dass mit dem erfindungsgemäß vorgeschlagenen Verfahren vertikale wie auch horizontale Abdichtungen beziehungsweise ein- oder mehrschichtige Versiegelungen erzielt werden können und dadurch beispielsweise eine Vollverkapselung von Deponien erreicht werden kann. Sich einstellende Umweltauswirkungen sind gering und idealerweise nicht vorhanden; des Weiteren geht von Polyisobuten keine Gefährdung der Grundwasserqualität aus. Nach Fertigstellung einer Abdichtung und/oder Versiegelung mittels des erfindungsgemäß vorgeschlagenen Verfahrens unter Verwendung von Polyisobuten fallen kaum weitere Betriebskosten und weiterer Erhaltungsaufwand an.

### Kurze Beschreibung der Zeichnung

Anhand der Zeichnung wird die Erfindung nachstehend eingehender beschrieben.

Es zeigt:
- Figur 1: eine schematische Darstellung einer Versiegelung einer Oberfläche von Erdreich mittels eines Ein- oder Mehr-Schicht-Auftrags,
- Figur 2: eine schematische Darstellung einer Abdichtung einer ins Erdreich eingelassenen Deponie,
- Figuren 3.1 und 3.2: Bohrungsmuster vertikal in das Erdreich abgeteufter Bohrungen,
- Figur 4: eine Darstellung eines mittels einer Schnecke in einem anstehenden Boden erzeugten Bohrmusterverfüllung mit Polyisobutylen,
- Figur 5: Gebäudeteile eines unterirdischen Bauwerks mit einer ersten Schicht aus Polyisobuten unterhalb einer Bodenplatte,
- Figur 6: eine Ausführungsvariante der Polyisobuten-basierten Abdichtung eines im Boden liegenden Bauteils im Zwei-Schicht-Auftrag,
- Figur 7.1: eine Ausführungsvariante einer Polyisobuten-basierten Abdichtung mit einer ersten Schicht aus Polyisobuten-enthaltenden Material aufgebracht auf einer Trägerschicht,
- Figur 7.2: eine Abwandlung der Darstellung gemäß Figur 7.1, wonach zwischen zwei übereinander liegenden Bodenplatten eine erste Schicht aus Polyisobuten enthaltendem Material eingebracht ist,
- Figur 8: eine Darstellung einer aufgesprühten Polyisobutenbeschichtung aufgebracht auf eine Kellerwand eines Kellers einer verfüllten Baugrube,
- Figur 9: ein Abschnitt von Material einer verfüllten Baugrube, der mit Polyisobuten vermischt oder getränkt ist,
- Figur 10. 1 und 10.2: unterirdische Gebäudeteile und unterirdische Gebäude, die mit vorgefertigten Bauelementen teilweise oder vollständig ummantelt sind, die mindestens eine Schicht aus Polyisobuten enthaltendem Material aufweisen.

### Figurenbeschreibung

Im nachfolgenden Zusammenhang werden Polyisobuten, Polyisobutylen und PIB als Bezeichnung für ein und dasselbe Material benutzt. Unter Polyisobuten niedrigen Molekulargewichts wird in dieser Schrift ein Polyisobuten mit einem zahlenmittleren Molekulargewicht Mn (gemessen per GPC) bis zu 1500 g/mol verstanden, bevorzugt bis zu 1300 und besonders bevorzugt ein Molekulargewicht um 1000 g/mol. Unter Polyisobuten hohen Molekulargewichts wird ein Polyisobuten mit einem zahlenmittleren Molekulargewicht Mn (gemessen per GPC) von mehr als 1500 g/mol verstanden, bevorzugt mindestens 2000, besonders bevorzugt mindestens 2300 und ganz besonders bevorzugt mindestens 10 000 g/mol. Unter Polyisobuten niedriger Viskosität wird dementsprechend ein Polyisobuten mit einer Viskosität gemäß DIN 51562 bei 100 °C bis zu 1000 mm²/s verstanden, bevorzugt bis zu 500 und besonders bevorzugt bis zu 250 mm²/s. Polyisobuten hoher Viskosität weist eine Viskosität gemäß DIN 51562 bei 100 °C von mehr als 1000 mm²/s auf.

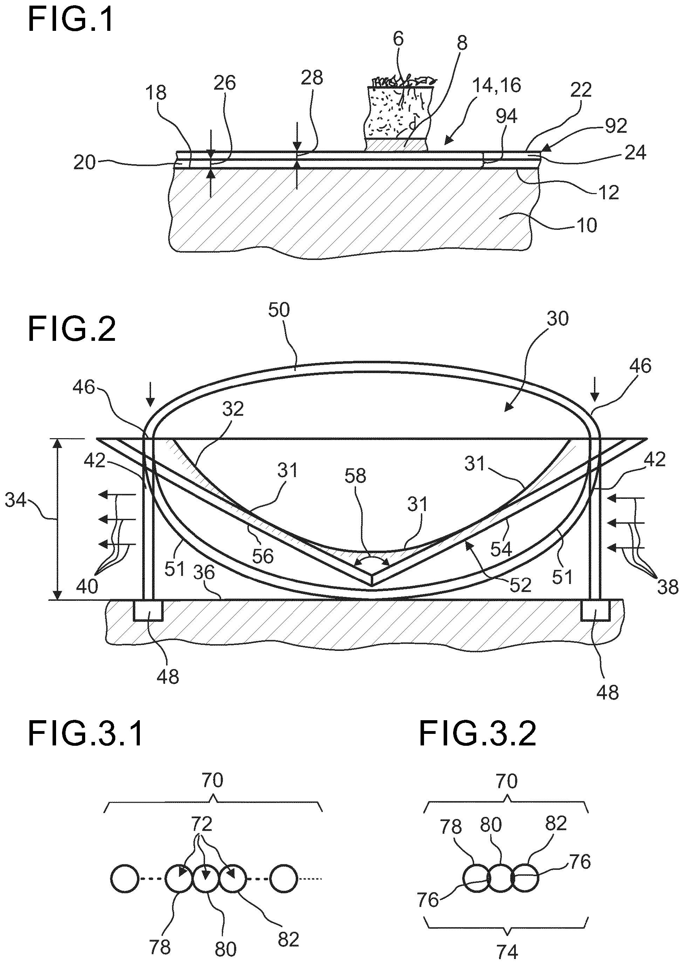

Figur 1 zeigt eine erste Ausführungsvariante der erfindungsgemäß vorgeschlagenen Polyisobuten-basierten Abdichtung 14 und/oder Polyisobuten-basierten Versiegelung 16, ausgeführt als Mehr-Schicht-Auftrag 94 auf einer Oberfläche 12 von Erdreich 10.

Figur 1 zeigt, dass eine Oberfläche 12 von Erdreich 10 zur Ausbildung einer flächigen Polyisobuten-basierten Abdichtung 14 beziehungsweise einer flächigen Polyisobuten-basierten Versiegelung 16 mit einem Mehr-Schicht-Auftrag 94 versehen ist. Der in Figur 1 dargestellte Mehr-Schicht-Auftrag 94 umfasst eine erste Schicht 18 und mindestens eine zweite Schicht 22. Die erste Schicht 18 des Mehr-Schicht-Auftrags 94 gemäß Figur 1 ist in einer ersten Schichtdicke 26 ausgeführt, während die zweite Schicht 22 des Mehr-Schicht-Auftrags 94 in einer zweiten Schichtdicke 28 ausgeführt ist. Die erste Schichtdicke 26 und die zweite Schichtdicke 28 können identisch sein oder voneinander abweichen.

Hinsichtlich der Schichtdicken 26, 28 liegt eine untere Schichtdickengrenze beziehungsweise eine Mindestschichtdicke bei 1 cm. Größere Schichtdicken sind nach oben hin offen.

Je größer die Schichtdicke 26, 28 desto größer ist die sich einstellende Sicherheit, dass der Abdichtungs- und Versiegelungseffekt erreicht wird und dauerhaft erhalten bleibt.

Ist die Schichtdicke 26, 28 größer als 10 cm, kann das Polyisobuten seinen großen Vorteil der Selbstheilung ausspielen.

Hinsichtlich einer Zusammensetzung der Schichten 18, 22 wird für die untere Schicht 18 ein PIB mit niedrigerer Viskosität verwendet. Dadurch füllt das PIB den Porenraum in dem darunterliegenden Erdreich 10 aus und bildet somit eine zusätzliche Sperre für das PIB mit höherer Viskosität in der zweiten darüber liegenden Schicht 22. Für das Aufbringen des PIB sind grundsätzlich drei Vorgehensweisen denkbar:
a) PIB auftragen as-is und in den Boden einfließen lassen beziehungsweise überschüssiges PIB insbesondere höher viskoses PIB, das nicht in den Boden eindringt, mit zum Beispiel Bodenmaterial beispielsweise Sand, wodurch sich eine tragfähige PIB/Sandschicht ausbildet, oder anderen Materialien abdecken oder b) als vorgefertigte Mischung mit einem Füllmaterial, zum Beispiel Sand etc., ausbringen oder c) ausbringen als Rolle oder Matten oder Platten mit vorzugsweise höhermolekularem PIB, das bereits auf einer Trägerschicht (zum Beispiel Folien oder stärker dimensionierten Trägermaterialien) oder zwischen zwei Trägerschichten in Sandwichbauweise als 1 bis 2 cm dicke Schicht as-is oder bereits mit Füllmaterial vermischt ist. Hierdurch erfolgen eine Erhöhung der Stabilität gegen Zusammendrücken und gleichzeitig ein teilweiser PIB-Ersatz mittels kostengünstigerer Füll- beziehungsweise Abstandshaltematerialien.

Der oben beschriebene Zweischicht-Aufbau ist lediglich eine Option/Überlegung hinsichtlich des Optimierens der Stabilität der Schicht 22. Bei entsprechend hochviskosem PIB, das zum Beispiel zum Auftragen erwärmt werden kann, ist durchaus auch ein Ein-Schicht-Aufbau denkbar.

Der in Figur 1 schematisch dargestellte Mehr-Schicht-Auftrag 94 umfasst die erste Schicht 18, die aus einem Polyisobuten 20 niedrigen Molekulargewichts oder aus einem mit Polyisobuten 20 niedrigen Molekulargewichts versetzten Material gebildet sein kann. Die zweite Schicht 22 des Mehr-Schicht-Auftrags 94 gemäß Figur 1 kann aus einem Polyisobuten 24 höheren Molekulargewichts gebildet sein. Während die erste Schicht 18 eine erste Sperre beziehungsweise Versiegelung 16 der Oberfläche 12 des Erdreichs 10 darstellt, dient die zweite Schicht 22 des Mehr-Schicht-Auftrags 24 als Redundanz, d. h. als Verbesserung der Versiegelung 16.

Wird beispielsweise die Oberfläche 12 des Erdreichs 10 durch den Auftrag von hochviskosem Polyisobuten im Originalzustand oder bereits vorgemischt mit Füllmaterial angewendet, kann bereits ein Ein-Schicht-Auftrag 92, wie in Figur 2 dargestellt, ausreichend sein.

Alternativ kann der in Figur 1 dargestellte Mehr-Schicht-Auftrag 94 gewählt werden. Beim Mehr-Schicht-Auftrag 94 erfolgt in einem ersten Schritt das Auftragen der ersten Schicht aus Polyisobuten 20 niedrigen Molekulargewichts, welches in das Erdreich 10 eindringt und dort eine erste Sperre bildet. In einem zweiten, nachfolgenden Schritt erfolgt der Auftrag eines höher viskosen Polyisobutens 24 mit höherem Molekulargewicht zur Ausbildung des Mehr-Schicht-Auftrags 94.

Figur 2 zeigt in schematischer Darstellung ein zu schützendes Objekt in Gestalt einer neu angelegten Deponie 30, wobei diese vor dem Verfüllen mit Deponiematerial mittels PIB eine allseitige (Boden und Seitenwände) Deponieauskleidung 32 erhalten hat. Wenngleich zeichnerisch nicht dargestellt, ist die Deponie gemäß der schematischen Darstellung in Figur 2 mit Materialien jeglicher Art, wie sie üblicherweise auf Deponien gelagert werden, versehen. Wie Figur 2 zeigt, ist die Deponie 30 als Grube in das Erdreich 10 eingelassen und gegen dieses über die hier in Figur 2 hier nur schematisch angedeutete Deponieauskleidung 32 abgedichtet. In einer Bodentiefe 34 von der Oberfläche 12 des Erdreichs 10 ist eine wassersperrende Schicht 36, zum Beispiel eine Tonschicht, eingezeichnet. Eine solche wassersperrende Schicht 36 ist üblicherweise unterhalb von Grundwasser führenden Bodenschichten anzutreffen. Typische Bodentiefen für solche wassersperrenden Schichten liegen zwischen 5 bis 30 m, können jedoch je nach den ortsabhängig unterschiedlichen hydrogeologischen Schichtaufbauten auch höher oder tiefer liegen. Das Vorhandensein der wassersperrenden Schicht 36 im Erdreich 10 bewirkt eine Grundwasserströmung 38, da das sich ansammelnde beziehungsweise unterirdisch zufließende Grundwasser beziehungsweise das über die Oberfläche 12 eindringende Oberflächenwasser aufgrund des Vorhandenseins einer wassersperrenden Schicht 36 nicht in vertikale Richtung nach unten abfließen kann, sondern durch die geologischen Gegebenheiten wie zum Beispiel Schichtgefälle etc. dem Grundwasser eine seitliche Grundwasserströmung 38 aufgeprägt wird.

Für bereits bestehende Deponien ("Altlasten") oder kontaminierte Flächen, die über keine allseitige Abdichtung verfügen, zeigt Figur 2 eine den gesamten abzudichtenden Bereich umschließende Dicht-/Schlitzwand 42. Die Dicht-/Schlitzwand 42, verläuft im Wesentlichen in vertikale Richtung durch das Erdreich 10 um das gegen Grundwasserzufluss 38 zu schützende Objekt - hier beispielsweise in Gestalt der Deponie 30. Entsprechend der jeweils vorherrschenden Bodentiefe 34 an der Deponie 30 ist die Dicht-/Schlitzwand 42 so tief bemessen, dass sie in die dort anzutreffende wassersperrende Schicht 36 sicher eingebunden ist. Damit wird der Schutz vor Zufluss von Grundwasser von außen gewährleistet sowie der unkontrollierte Abfluss von kontaminiertem Wasser aus der Deponie verhindert.

In der Darstellung gemäß Figur 2 ist schematisch angedeutet, dass die Oberfläche 12 der Deponie oder kontaminierten Fläche beispielsweise über einen Ein-Schicht-Auftrag 92 einer Schicht 18 aus Polyisobuten 20 mit sehr hohem Molekulargewicht abgedichtet beziehungsweise versiegelt sein kann.

Es könnte sich in Bezug auf den Zwei bzw. Mehr-Schicht-Auftrag 92 auch um einen Auftrag einer ersten Schicht 18 aus Polyisobuten 24 niedrigeren Molekulargewichts und einer zweiten Schicht 22 mit höher molekularem Polyisobuten (PIB) als Polyisobuten-basierte Versiegelung 16 beziehungsweise Polyisobuten-basierte Abdichtung 14 handeln.

Die Grundwasserzuströmung 38 zum zu schützenden Objekt in Gestalt der Deponie 30 hätte bei Nicht-Vorhandensein der Dicht-/Schlitzwand 42 ein Durchströmen der Deponie beziehungsweise des kontaminierten Bodens mit Grundwasser in Figur 2 in Richtung von 38 nach 40 zur Folge. Hierbei könnte die Grundwasserabströmung 40 durch den Inhalt der in der Deponie 30 gelagerten Materialien beziehungsweise durch den belasteten Boden kontaminiert sein. Dies gilt es durch die in Figur 2 dargestellte umschließende (allseitiges Umschließen ist schematisch dreidimensional mit 50 angedeutet) Dicht-/Schlitzwand 42 zu verhindern. Das Erstellen der Dicht-/Schlitzwand 42 mit Hilfe von Polyisobuten (PIB) wird nachstehend dargelegt. Gestrichelt ist in Figur 2 eine vollständige Einhüllung 51 oder eine Vollverkapselung 51 der Deponie 30 samt Inhalt angedeutet, auch aus Polyisobuten oder einem Polyisobuten enthaltenden Material gefertigt.

Die vertikale Dicht-/Schlitzwand 42 sollte um das gesamte zu schützende Objekt 30 herum angelegt werden, um zuverlässig vor Zu- und gegen Abfluss von Wasser schützen zu können.

Alternativ besteht die Möglichkeit, diese als Fächerbohrungen 52 auszuführen, die ein erstes Fächerbohrungsteil 54 und ein zweites Fächerbohrungsteil 56 umfassen, die sich beispielsweise unterhalb der Deponie 30 treffen und somit einen kegelförmigen Abdichtkonus unterhalb der Deponie 30 bilden. Die Fächerbohrung 52 kann beispielsweise in einem Spreizungswinkel 58 ausgebildet sein und ist im Wesentlichen als eine Anzahl von Bohrungen ausgebildet, welche unterhalb der gegen eine Grundwasserzuströmung 38 zu schützenden Deponie 30 verlaufen.

Der Darstellung der Figur 3.2 ist eine Ausführungsmöglichkeit der Dicht-/Schlitzwand 42 zu entnehmen. Die beispielsweise in Figur 2 dargestellte Dicht-/Schlitzwand 42 erstreckt sich von der Oberfläche 12 der Deponie 30, d. h. des zu schützenden Objekts, in vertikale Richtung zur Einbindung 48 in die wassersperrende Bodenschicht 36, wie in der Darstellung in Figur 2 in schematischer Weise gezeigt. Die Dicht-/Schlitzwand 42 kann beispielsweise durch ein in der Darstellung gemäß Figur 3.1 dargestelltes Bohrmuster 70 gebildet werden. Zur Herstellung der Dicht-/Schlitzwand 42 können beispielsweise eine Anzahl von Bohrungen zum Beispiel einzeln oder drei gleichzeitig hier 78, 80, 82 entsprechend des Bohrmusters 70 in Figur 3.1 in das Erdreich 10 abgeteuft werden und in einer nebeneinanderliegenden Abfolge, wie in Figur 3.1, ausgeführt werden. Bei dem Bohrmuster 70 ergibt sich zwangsläufig für eine jede der Bohrungen 78, 80, 82 ein kreisrunder Querschnitt 72. Die einzelnen Umfänge der Bohrungen 78, 80, 82 überlappen einander beziehungsweise liegen so eng beieinander, dass ein seitlich dichter Zusammenschluss der eingebrachten Polyisobuten-Mengen der jeweils benachbarten Säulen gewährleistet ist.

Die wie auch immer hergestellten und in der Form aussehenden "PIB-Säulen" beziehungsweise "PIB-Bodengemisch-Säulen" sollten stets "überlappend" sein beziehungsweise für PIB ausreichend eng genug aneinander liegen, damit durch seitlichen Zusammenschluss der eingebrachten Polyisobuten-Mengen in den Säulen über die gesamte Länge eine dichte Verbindung entsteht.

Die in Figur 3.2 dargestellten Bohrungen 78, 80, 82, im Bohrungsmuster 70 - seien sie beispielsweise mittels Hochdruckinjektionsverfahren mit Mehrfachschnecken, Einzelbohrsträngen, Schlitzwandfräsen, Düsenstrahlverfahren oder anderen geeigneten Herstellverfahren erstellt - bilden in der Aneinanderreihung die Dicht-/Schlitzwand 42. Diese umgibt das zu schützende Objekt in Gestalt der Deponie 30 und schützt somit gegen die seitliche Grundwasserzuströmung 38 von außen. Ferner wird ein unkontrollierter Abfluss beziehungsweise Austritt von möglicherweise kontaminiertem Wasser oder sonstigen Flüssigkeiten beziehungsweise Feststoffen, zum Beispiel kleinteiliger Partikel oder Gase, verhindert.

Die in Figur 3.2 dargestellten, die Dicht-/Schlitzwände 42 bildenden, Bohrungen 78, 80, 82 werden über aus dem Stand der Technik bekannte Verfahren beispielsweise Hochdruckinjektionsverfahren oder Einschlämmen oder dergleichen erstellt. Dabei kann zum Beispiel der um die Bohrungen vorhandene Boden in-situ mit PIB vermischt werden, beziehungswiese es können erstellte Hohlräume mit PIB-basiertem Material verfüllt werden.

Hinsichtlich einer Zusammensetzung der Schichten 18, 22 ist festzuhalten, dass für die untere Schicht 18 ein PIB mit niedrigerer Viskosität verwendet wird. Dadurch füllt das PIB den Porenraum in dem darunterliegenden Erdreich 10 aus und bildet eine zusätzliche Sperre für das PIB mit höherer Viskosität in der zweiten darüber liegenden Schicht 22.

Hierdurch ist eine Erhöhung der Stabilität gegen Zusammendrücken und gleichzeitig teilweiser PIB-Ersatz mittels kostengünstigerer Füll- beziehungsweise Abstandshaltematerialien erreichbar.

Bevorzugt wird Polyisobutylen mit Zusatzstoffen, wie beispielsweise Sand, Boden oder Kies versetzt, um ein stabiles Material zu erhalten. Dem Füllmaterial, insbesondere Kies oder Sand, wird Polyisobutylen 20 niedrigen Molekulargewichts oder Polyisobutylen 24 höheren Molekulargewichts zugesetzt. Polyisobutylen zeichnet sich durch seine inerten Eigenschaften aus und die Eigenschaften, dass es bei einer Beschädigung beziehungsweise bei der Bildung von Rissen, Löchern oder dergleichen die Tendenz aufweist, die durch Risse beziehungsweise Löcher entstandenen Öffnungen selbsttätig wieder zu verschließen. Polyisobutylen 20 niedrigen Molekulargewichts oder Polyisobuten 24 höheren Molekulargewichts wird in-situ mit dem Boden vermischt oder zum Beispiel as-is oder mit einem Füllmaterial wie Sand oder Kies in die Bohrungen 78, 80, 82 verfüllt, wo sich dieses Material verfestigt und eine zuverlässige Abdichtung bildet.

Durch die mit Polyisobutylen 20 niedrigen Molekulargewichts oder Polyisobutylen 24 höheren Molekulargewichts versetzten Bodenmaterialien wie Sande und Kiese, können Polyisobutylen-basierte Abdichtungen 14 von Oberflächen 12 beziehungsweise Polyisobutylen-basierte Versiegelungen 16 von Erdreich 10 geschaffen werden, insbesondere zur Abdichtung von Deponien 30 und kontaminierten Flächen mit grundwasser- und umweltgefährdenden Stoffen beziehungsweise Materialien. Des Weiteren lassen sich auf diese Weise ehemalige Industriestandorte, neu anzulegende Deponien oder kontaminierte Böden beziehungsweise anderweitig belastete Böden beziehungsweise Erdreich 10 abschirmen. Ebenso können Bauwerke von in Figur 2 schematisch dargestellten diese umschließende Dicht-/Schlitzwände 42 vor der Grundwasserzuströmung 38 geschützt werden.

Polyisobutylen zeichnet sich insbesondere durch eine ausgezeichnete Abdichteigenschaft gegenüber Flüssigkeiten und Gasen aus, ferner ist dieses Material hydrophob sowie beständig gegen Wärme und Kälte. Polyisobutylen gleich welchen Molekulargewichts weist des Weiteren eine hohe Chemikalienbeständigkeit auf sowie eine sehr hohe Füllmittelaffinität und ist elektrisch nicht leitend.

Polyisobutylen beziehungsweise mit Polyisobutylen versetztes Material in Gestalt preiswerter Zusatzstoffe wie Kies oder Sand ist inert, weist keine nachteiligen Umweltauswirkungen auf und ist für Menschen unschädlich, was durch verwendungsspezifische Approvals beispielsweise für Verwendungen in der Medizin zum Beispiel für Pflaster, für Klebstoff von Lebensmittelverpackungen oder Bestandteil von Kaugummiformulierungen gestützt wird. Ferner weist dieses Material ausgezeichnete Klebeeigenschaften adhäsiv wie kohäsiv auf und weist hierdurch insbesondere selbstheilende Eigenschaften auf. Polyisobutylen, ein niedriges oder ein hohes Molekulargewicht aufweisend, kann im "in-situ"-Verfahren beziehungsweise im "mixed-in-place"-Verfahren zur Herstellung von Abdichtungen eingesetzt werden, die allseitig oder partiell um das zu schützende Objekt beispielsweise in Gestalt der in Figur 2 angedeuteten Deponie 30 angelegt werden. Polyisobutylen beziehungsweise mit diesem versetztes Material kann durch Hochdruckinjektionsverfahren mit Drücken bis zu mehreren hundert bar eingesetzt werden.

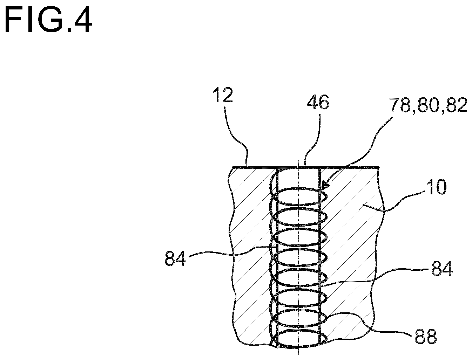

Weist dieses Material ein niedriges Molekulargewicht auf, so ist es flüssig beziehungsweise fließfähig und kann beispielsweise durch die Hohlseele eines in Figur 4 dargestellten Spiralbohrers 88 in Bohrungen wie 78, 80, 82 zum Beispiel beim Herausdrehen des Bohrgestänges gepumpt und eingebracht werden und vermischt sich dabei in-situ mit dem durchbohrten Boden, der die Bohrung 78, 80, 82 gegen den anstehenden Boden 84 zuverlässig abdichtet.

Bei dem Einsatz von höherviskosem Polyisobutylen kann die Pumpfähigkeit durch vorheriges Erwärmen erreicht werden. Nimmt das in die Bohrungen eingebrachte Polyisobutylen seinen festeren Zustand ein, so wird eine zuverlässige Abdichtung gegen den anstehenden Boden 84, wie er in Figur 4 schematisch dargestellt ist, erreicht. Die Bohrungen 78, 80, 82 werden beispielsweise durch einen Spiral- beziehungsweise Schneckenbohrer oder Mischpaddel 86 im anstehenden Boden 84 erzeugt.

Durch die Ausbildung von PIB-basierenden Abdichtungen mit einer Dicht-/Schlitzwand 42 von Deponien 30 gemäß Figur 2 beziehungsweise die flächige Polyisobutylen-basierte Abdichtung 14 beziehungsweise flächige Polyisobutylen-basierte Versiegelung 16 von Oberflächen 12 von Erdreich 10 gemäß Figur 1 können bisherig eingesetzte kostenintensive Verfahren umgangen beziehungsweise optimiert werden.

So lässt sich bei Anwendung der erfindungsgemäß vorgeschlagenen Abdichtung mit einer erfindungsgemäß vorgeschlagenen Polyisobutylen-basierten Abdeckung 14 mit einer Dicht-/Schlitzwand 42 eine Grundwasserabsenkung zur Trockenhaltung vermeiden, ebenso wie Dicht-/Schlitzwände 42 mit Vereisungen sowie eine Auskofferung aufgetretener Kontamination mit anschließendem Verbringen oder eine Bodenwäsche. Es lässt sich insbesondere bei "in-situ"-Verfahren erreichen, dass unterschiedliche Bodenqualitäten bearbeitet werden können und insbesondere ein Abtransport ausgehobenen Bodenmaterials in Gestalt von Aushub unterbleibt. Polyisobutylen ist ein erdbebensicheres Material und zeichnet sich vor allem dadurch aus, dass ein selbstständiger Wiederverschluss an beschädigten Stellen erfolgt. Nach Fertigstellung der Polyisobutylen-basierten Abdichtungen 14 mit einer Dicht-/Schlitzwand 42 und gegebenenfalls flächigen Polyisobutylen-basierten Abdichtungen 14 beziehungsweise der Polyisobutylen-basierten Versiegelung 16 sind keine beziehungsweise geringere Betriebskosten und Erhaltungsaufwendungen möglich. Insbesondere ergeben sich keine nachteiligen Umweltauswirkungen sowie keine Gefährdung der Grundwasserqualität.

Welche Molekulargewichte oder auch Mischungen von Polyisobutylen am besten zum Einsatz kommen, ist für jeden Einzelfall spezifisch zu bestimmen. Wesentlichen Einfluss werden hierauf zum Beispiel die unterschiedlichen geologischen Gegebenheiten, gewählte Herstellungsverfahren und Füllmaterialverfügbarkeiten haben.

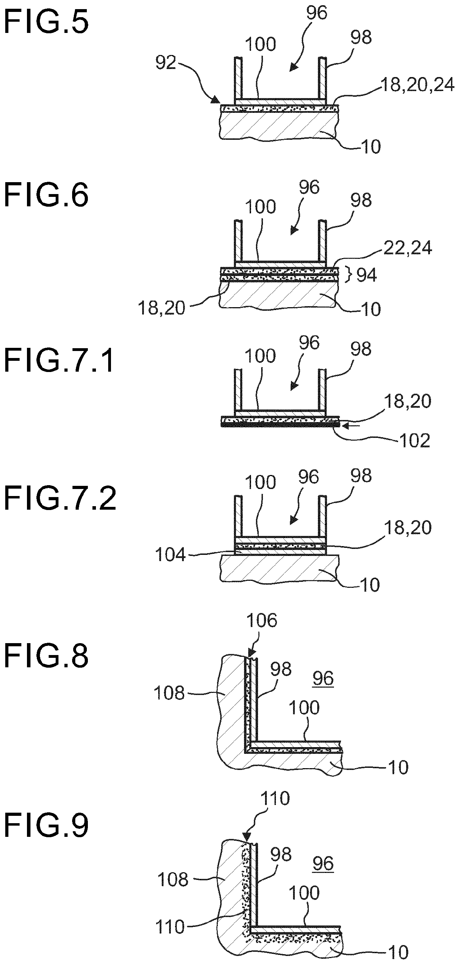

Der Darstellung gemäß Figur 5 ist ein im Boden liegender Gebäudeteil, beispielsweise ein Keller 96, zu entnehmen, der von einer Kellerwand 98 und einer ersten Bodenplatte 100 begrenzt ist. Zwischen dem Erdreich 10 ist im Ein-Schicht-Auftrag 92 die erste Schicht 18 aufgetragen. Die erste Schicht 18 ist beispielsweise ein Polyisobuten niedrigen Molekulargewichts mit einem Füllmaterial, kann jedoch auch eine erste Schicht 18 sein, die ein Polyisobuten hohen Molekulargewichts mit Bodenfüllmaterial umfasst. Aus der Darstellung gemäß Figur 5 geht hervor, dass die erste Schicht 18 die erste Bodenplatte 100 im direkten vollflächigen Kontakt überdeckt und den Keller 56 schützt.

Figur 6 zeigt eine weitere Ausführungsvariante eines direkten vollflächigen Kontakts einer Polyisobuten enthaltenden ersten Schicht 18 und der zweiten Schicht 22, die Polyisobuten niedrigen Molekulargewichts 20 oder Polyisobuten hohen Molekulargewichts 24 enthalten. Die erste Schicht 18 und die zweite Schicht 22 sind im Mehr-Schicht-Auftrag 94 aufgetragen und überdecken die dem Erdreich 10 zugewandte Unterseite der ersten Bodenplatte 100 in direktem vollflächigem Kontakt, sodass der hier angedeutete Keller 96 als im Boden liegendes Gebäudeteil geschützt ist.

Den Figuren 7.1 und 7.2 ist eine Ausführungsvariante zu entnehmen, bei der das im Boden beziehungsweise im Erdreich 10 liegende Bauwerk in Gestalt eines Kellers 96 begrenzt von Kellerwänden 98 durch einen direkten vollflächigen Kontakt mit der ersten Schicht 18 aus Polyisobuten niedrigen Molekulargewichts gegebenenfalls mit einem Füllmaterial versehen ist. Die erste Schicht 18 ist auf einer Trägerschicht 102 aufgebracht. Bei der Trägerschicht 102 kann es sich um eine Folie, um eine Matte oder um Platten handeln. Die Trägerschicht 102 kann durch vorgefertigte Rollen, Matten oder Platten dargestellt werden, mit einer zum Beispiel zwischen 0,5 und 2 cm dicken Polyisobutenschicht, vorzugsweise aus Polyisobuten 24 hohen Molekulargewichts. Diese Schicht ist auf die Trägerschicht 102 zum Beispiel ausgebildet als Folie oder einem anderen stärker dimensionierten Trägermaterial as-is aufgebracht oder mit Füllmaterial vermischt aufgebracht. Durch den Einsatz von Füllmaterial kann beispielsweise die Stabilität gegen Zusammendrücken nach anschließender Überbauung erheblich gesteigert werden. Zudem ermöglicht es einen teilweisen Polyisobutenersatz mittels kostengünstiger Füll- beziehungsweise Abstandshaltematerialien. Die Trägerschicht 102 in Gestalt von Rollen, Matten, Folien oder Platten kann entweder wie in Figur 7.1 dargestellt unterhalb der ersten Bodenplatte 100 angeordnet werden oder wie in Figur 7.2 angedeutet in Gestalt einer ersten Schicht 18 zwischen einer ersten Bodenplatte 100 und einer zweiten Bodenplatte 104 angeordnet werden.

Den Figuren 8, 9, 10.1 und 10.2 ist eine Abdichtung von im Erdreich 10 liegenden, zum Beispiel vertikalen oder runden, Wänden von Gebäuden 96 und/oder unterirdischen Bauwerken 112 beispielsweise Tunnel 114 dargestellt, die vor Feuchtigkeit beziehungsweise Wasserzutritt zu schützen sind.

Figur 8 zeigt, dass die Kellerwände 98 des Kellers 96 gegen das Material einer verfüllten Baugrube 108 beispielsweise mit einer aufgesprühtes Polyisobuten enthaltenden Schicht 106 versehen sind. Anstelle eines Besprühens kann auch ein direktes Auftragen auf die Kellerwand 98 auf deren Außenseite mit vorzugsweise jedoch nicht ausschließlich höhermolekularem Polyisobuten 24 erfolgen. Für höhermolekulares Polyisobuten ist dieses zu erwärmen, damit es sprühfähig beziehungsweise ausreichend fließfähig ist. Auf der Außenseite der Kellerwand 98 gemäß der Darstellung in Figur 8 bildet dieses nach Abkühlen eine dicke, zum Beispiel zwischen 0,3 cm bis 2 cm starke, Schutzschicht aus.

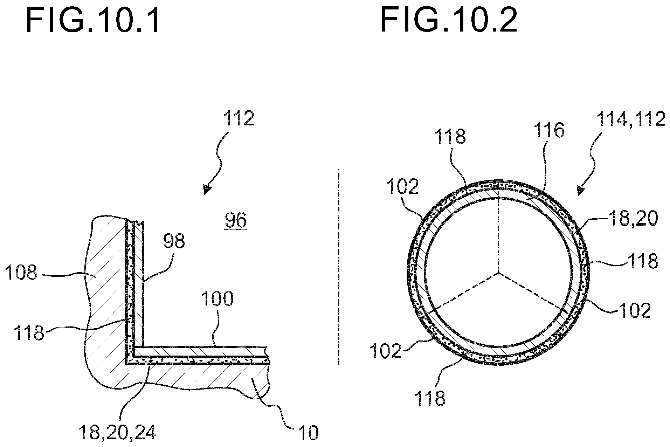

Alternativ zur Ausführungsvariante, die in Figur 8 dargestellt ist, kann gemäß Figur 9 ein an die Außenseite der Kellerwand 98 des Kellers 96 angrenzender Bereich der verfüllten Baugrube 108 als mit Polyisobuten gemischter beziehungsweise getränkter Bodenbereich 110 gestaltet werden. Schließlich kann wie in den Figuren 10.1 und 10.2 dargestellt der Schutz der im Erdreich 10 liegenden Gebäudeteile, beispielsweise des Kellers 96, beziehungsweise der Schutz unterirdischer Bauwerke 112 in Gestalt von Tunneln 14 im direkten vollflächigen Kontakt dadurch erfolgen, dass vorgefertigte Bauelemente 118 mit mindestens einer Polyisobuten 20, 24 enthaltenden Schicht eingesetzt werden.

Gemäß einer ersten Ausführungsvariante, die in Figur 10.1 dargestellt ist, kann auf der dem Material der verfüllten Baugrube 108 zuweisenden Seite der Kellerwand 98 ein vorgefertigtes Bauelement 118 dadurch gebildet werden, dass Polyisobuten 20, 24 durch vorgefertigte Rollen, Matten oder Platten, umfassend eine mindestens 0,5 cm bis 2 cm dicke und vorteilhaft dickere höhermolekulare Polyisobuten-Schicht 24 aufgebracht ist, die auf einer Trägerschicht 102 in Gestalt einer Folie oder eines anderen stärker dimensionierten Trägermaterials as-is oder mit Füllmaterial vermischt aufgebracht ist. Durch den Einsatz von Füllmaterial kann beispielsweise die Stabilität gegen Zusammendrücken nach abschließender Verfüllung der Baugrube 108 erhöht werden.

Die vorgefertigten Bauelemente 118 mit mindestens einer Polyisobuten 20, 24 enthaltenden Schicht können beispielsweise flächig oder auch kreisbogenförmig ausgebildet sein. Eine kreisbogenförmige Konfiguration der vorgefertigten eine PIB-Schicht oder - Beschichtung enthaltenden vorgefertigten Bauelemente 118 bietet sich beispielsweise bei unterirdischen Bauwerken 112 in Gestalt von Tunneln 114 an. Beispielsweise ist ein unterirdisches Bauwerk 112 in Gestalt eines Tunnels 114 mit einer Tunnelauskleidung 116 versehen. Auf der Außenseite der Tunnelauskleidung 116 sind in der Darstellung gemäß Figur 10.2 drei kreisbogenförmig ausgeführte vorgefertigte Bauelemente 118 mit mindestens einer Polyisobuten 20, 24 enthaltenden Schicht verbaut, welche das unterirdische Bauwerk 112 in Gestalt des Tunnels 114 gegen unerwünschten Wassereintritt beziehungsweise Wasserzutritt vollumfänglich schützen.

Durch eine Kombination aus der Abdichtung des Untergrunds, d. h. des Erdreichs 10, unter oder über einer oder mehreren Bodenplatten 100, 104 und eine damit direkt verbundene seitliche Abdichtung der Kellerwände 98, kann eine komplette Abdichtung der im Erdreich 10 beziehungsweise in einer verfüllten Baugrube 108 liegenden Gebäudeteile beziehungsweise von unterirdischen Bauwerken 112 in Gestalt von Tunneln 114 erreicht werden.

Je nach Anwendungsfall können beispielsweise bei Dicht- und Schlitzwänden 42 niedrig bis mittelmolekulare PIB-Klassen eingesetzt werden, bei denen die Verarbeitbarkeit beziehungsweise die Pumpfähigkeit besonders wichtig ist, da das Polyisobuten zum Beispiel mit den obenstehend skizzierten Bohrverfahren tief in das Erdreich 10 gepresst wird. Hier ist bedeutsam, inwieweit sich durch Erwärmen des Polyisobutens 20, 24 zur Viskositätsverbesserung die Grenze der einsetzbaren Molekulargewichte verschiebt. Hinsichtlich einer Oberflächenversiegelung oder bei direktem vollflächigen Wand- beziehungsweise Schutzobjektkontakt werden niedrig- bis hochmolekulare Polyisobutenmaterialien eingesetzt, mithin die ganze Bandbreite.

Bei vorgefertigten Bauelementen 118 in Platten-, Rollen-, Matten- oder Folienform werden vorzugsweise mittel- bis hochmolekulare Polyisobutenmaterialien zum Einsatz kommen.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

### Bezugszeichenliste

- 06: Rekultivierungsschicht

- 08: Entwässerungsschicht oder Drainagematte

- 10: Erdreich
- 12: Oberfläche
- 14: Abdichtung
- 16: Versiegelung
- 18: Erste Schicht
- 20: Polyisobuten niedrigen Molekulargewichts mit Bodenfüllmaterial
- 22: Zweite Schicht
- 24: Polyisobuten hohen Molekulargewichts
- 26: Erste Schichtdicke
- 28: Zweite Schichtdicke
- 30: Deponie
- 31: Deponiesohle und Seitenwände
- 32: Deponieauskleidung
- 34: Distanz Oberfläche bis wassersperrende Bodenschicht
- 36: Wassersperrende Bodenschicht
- 38: Grundwasserzuströmung
- 40: Grundwasserabströmung
- 42: Dicht-/Schlitzwand
- 46: Einführstelle
- 48: Einbindung in wassersperrende Bodenschicht
- 50: Abdeckung
- 51: Einhüllung Vollverkapselung
- 52: Fächerbohrung
- 54: Erstes Fächerbohrungsteil
- 56: Zweites Fächerbohrungsteil
- 58: Spreizungswinkel
- 70: Bohrmuster
- 72: Runder Querschnitt

- 76: Überlappung
- 78: Erste Bohrung
- 80: Zweite Bohrung
- 82: Dritte Bohrung
- 84: Anstehender Boden

- 88: Schnecken- / Spiralbohrer mit Hohlseele

- 92: Ein-Schicht-Auftrag
- 94: Mehr-Schicht-Auftrag
- 96: Keller
- 98: Kellerwand
- 100: Erste Bodenplatte
- 102: Trägerschicht (Rollenmaterial, Folie, Matten, Platten)
- 104: Zweite Bodenplatte
- 106: Aufgespritzte Polyisobuten enthaltende Schicht
- 108: Materialverfüllte Baugrube
- 110: Mit Polyisobuten gemischter, getränkter Boden
- 112: Unterirdisches Bauwerk
- 114: Tunnel
- 116: Tunnelauskleidung
- 118: Vorgefertigtes Bauelement

## Patentansprüche

1. Polyisobuten-basierte Abdichtung (14, 42) und/oder Polyisobuten-basierte Versiegelung (16) bestehender oder neu anzulegender Deponien (30), kontaminierter Flächen oder Bauwerke wie Baugruben, ins Erdreich verlegter Bauten, bergmännischer Einrichtungen vor Kontakt mit oder Zufluss von Grundwasser und/oder Oberflächenwasser, vor Austritt schädlicher Gase und/oder Kontaminierungen, **dadurch gekennzeichnet, dass** um ein gegen eindringendes Grundwasser und/oder Oberflächenwasser zu schützendes Objekt (30, 32) in einem Abstand angeordnete Dicht- oder Schlitzwände (42) mit Polyisobuten (20, 24) oder mit Polyisobuten (20, 24) enthaltendem Material verfüllt sind und/oder eine Oberfläche (12) von Erdreich (10) mit einem zumindest eine Schicht (18, 22) aus Polyisobuten (20, 24) oder einem Polyisobuten (20, 24) enthaltendem Material als Polyisobuten-basierte Versiegelung (16) versehen ist oder im Erdreich (10) liegende Gebäudeteile (96, 98, 100, 104) oder unterirdische Bauwerke (112, 114) oder Deponien und Lagerstätten radioaktiven Materials und deren Behältnisse in direktem, vollflächigem Kontakt mit Polyisobuten (20, 24) oder einem Polyisobuten (20, 24) enthaltendem Material stehen.

2. Polyisobuten-basierte Abdichtung (14, 42) und/oder Polyisobuten-basierte Versiegelung (16) gemäß Anspruch 1, **dadurch gekennzeichnet, dass** anstehender Boden (84) aufgebrochen und umgelagert ist und Porenräume mit Polyisobuten (20, 24) oder Polyisobuten (20, 24) enthaltendem Material verfüllt sind.

3. Polyisobuten-basierte Abdichtung (14, 42) und/oder Polyisobuten-basierte Versiegelung (16) gemäß Anspruch 1, **dadurch gekennzeichnet, dass** die Polyisobuten-basierte Abdichtung (14, 42) und/oder die Polyisobuten-basierte Versiegelung (16) der Oberfläche (12) oder bei neu anzulegenden Deponien der Sohle und Seitenwände (31) als Ein-Schicht-Auftrag (92) oder als Mehr-Schicht-Auftrag (94) einer Deponieauskleidung (32) ausgeführt ist.

4. Polyisobuten-basierte Abdichtung (14, 42) und/oder Polyisobuten-basierte Versiegelung (16) gemäß Anspruch 3, **dadurch gekennzeichnet, dass** der Ein-Schicht-Auftrag (92) eine Schicht (18) Polyisobuten (20) niedrigen Molekulargewichts oder Polyisobuten (24) hohen Molekulargewichts umfasst oder eine Schicht (18) mit einem mit Polyisobuten (20) niedrigen Molekulargewichts versetzten Material oder mit einem mit Polyisobuten (24) hohen Molekulargewichts versetzten Material umfasst.

5. Polyisobuten-basierte Abdichtung (14, 42) und/oder Polyisobuten-basierte Versiegelung (16) gemäß Anspruch 3, **dadurch gekennzeichnet, dass** der Mehr-Schicht-Auftrag (94) zumindest eine erste Schicht (18) aus Polyisobuten (20) niedrigen Molekulargewichts oder aus Polyisobuten (24) höheren Molekulargewichts umfasst und eine zweite, darüber liegende Schicht (18) mit einem mit Polyisobuten (20) niedrigen Molekulargewichts versetzten Material oder mit einem mit Polyisobuten (24) hohen Molekulargewichts versetzten Material umfasst.

6. Polyisobuten-basierte Abdichtung (14, 42) und/oder Polyisobuten-basierte Versiegelung (16) gemäß Anspruch 3, **dadurch gekennzeichnet, dass** der Mehr-Schicht-Auftrag (94) eine erste Schicht (18) mit einem mit Polyisobuten (20) niedrigen Molekulargewichts versetzten Material oder mit einem mit Polyisobuten (24) höheren Molekulargewichts versetzten Material umfasst.

7. Polyisobuten-basierte Abdichtung (14, 42) und/oder Polyisobuten-basierte Versiegelung (16) gemäß Anspruch 3, **dadurch gekennzeichnet, dass** auf der Oberfläche (12) des Erdreichs (10) die erste Schicht (18) mit Polyisobuten (20) niedrigen Molekulargewichts und auf der ersten Schicht (18) mindestens eine weitere, zweite Schicht (22) mit Polyisobuten (24) höheren Molekulargewichts versetzten Material aufgebracht ist.

8. Polyisobuten-basierte Abdichtung (14, 42) und/oder Polyisobuten-basierte Versiegelung (16) gemäß Anspruch 7, **dadurch gekennzeichnet, dass** die auf das Erdreich (10) aufgebrachte erste Schicht (18) Polyisobuten mit niedriger Viskosität und die über dieser liegende zweite Schicht (22) Polyisobuten mit höherer Viskosität aufweist.

9. Polyisobuten-basierte Abdichtung (14, 42) und/oder Polyisobuten-basierte Versiegelung (16) gemäß Anspruch 3, **dadurch gekennzeichnet, dass** sich die Dicht-/Schlitzwände (42) in einer Bodentiefe (34) bis zu einer wassersperrenden Bodenschicht (36) im Erdreich (10) erstrecken und in diese eingebunden sind.

10. Polyisobuten-basierte Abdichtung (14, 42) und/oder Polyisobuten-basierte Versiegelung (16) gemäß einem der Ansprüche 1 bis 9, **dadurch gekennzeichnet, dass** die Dicht-/Schlitzwände (42) durch eine Vielzahl in das Erdreich (10) vertikal abgeteufter, nebeneinander liegender und einander in einer Überlappung (76) überdeckender Bohrungen (78, 80, 82) gebildet sind, die eine durchgehende Dichtwand (42) bilden.

11. Polyisobuten-basierte Abdichtung (14, 42) und/oder Polyisobuten-basierte Versiegelung (16) gemäß Anspruch 10, **dadurch gekennzeichnet, dass** die Dicht-/Schlitzwand (42) durch eine Fächerbohrung (52) mit einem ersten Fächerbohrungsteil (54) und einem zweiten Fächerbohrungsteil (56) gebildet ist, die sich unterhalb des zu schützenden Objekts (30, 32) in einem Spreizungswinkel (58) bis zur Oberfläche (12) des Erdreichs (10) erstrecken und eine Abdichtung einer Sohlen- und Seitenwand bilden.

12. Polyisobuten-basierte Abdichtung (14, 42) und/oder Polyisobuten-basierte Versiegelung (16) gemäß den Ansprüchen 10 oder 11 , **dadurch gekennzeichnet, dass** die Bohrungen (78, 80, 82) oder die Fächerbohrungsteile (54, 56) mit einem Polyisobutylen (20) niedrigen Molekulargewichts enthaltenden Material oder mit einem Polyisobutylen (24) höheren Molekulargewichts enthaltenden Material verfüllt sind.

13. Polyisobuten-basierte Abdichtung (14, 42) und/oder Polyisobuten-basierte Versiegelung (16) gemäß einem der Ansprüche 9 bis 12, **dadurch gekennzeichnet, dass** die Bohrungen (78, 80, 82) in das Erdreich (10) abgeteuft sind, derart, dass in und nahe um die Bohrungen (78, 80, 82) anstehender Boden (84) entsprechend der Bohrtiefe (34) unter Einbindung in die wassersperrende Bodenschicht (36) mit einem mit Polyisobuten (20) niedrigen Molekulargewichts versetzten Material oder mit einem mit Polyisobuten (24) hohen Molekulargewichts versetzten Material verfüllt ist beziehungsweise mit Bodengemischen, die mit den Polyisobutenen (20, 24) in-situ hergestellt sind.

14. Polyisobuten-basierte Abdichtung (14, 42) und/oder Polyisobuten-basierte Versiegelung (16) gemäß einem der vorstehenden Ansprüche, **dadurch gekennzeichnet, dass** diese im Ein-Schicht-Auftrag (92) oder im Mehr-Schicht-Auftrag (94) oder als aufgespritzte Polyisobuten (20, 24) enthaltende Schicht (106) oder als vorgefertigtes Bauelement (118) mit mindestens einer Polyisobuten (20, 24) enthaltenden Schicht auf mit Erdreich (10) oder Boden einer verfüllten Baugrube (108) in Kontakt stehenden unterirdischen Gebäudeteilen (96, 98, 100, 104) oder Bauwerken (112, 114) aufgebracht ist.

15. Polyisobuten-basierte Abdichtung (14, 42) und/oder Polyisobuten-basierte Versiegelung (16) gemäß Anspruch 14, **dadurch gekennzeichnet, dass** an unterirdischen Gebäudeteilen (96, 98, 100, 104) oder an Bauwerken (112, 114) angrenzendes Erdreich (10) mit Polyisobuten (20, 24) gemischt oder getränkt ist.

16. Polyisobuten-basierte Abdichtung (14, 42) und/oder Polyisobuten-basierte Versiegelung (16) gemäß Anspruch 14, **dadurch gekennzeichnet, dass** die vorgefertigten Bauelemente 118 mit mindestens einer Polyisobuten (20, 24) enthaltenden Schicht eine Trägerschicht (102) enthalten, die als Rollenmaterial, als Bandagen, als Platten, als Folien oder als Matte ausgeführt ist.

17. Polyisobuten-basierte Abdichtung (14, 42) und/oder Polyisobuten-basierte Versiegelung (16) gemäß Anspruch 14, **dadurch gekennzeichnet, dass** die vorgefertigten Bauelemente (118) mit mindestens einer Polyisobuten (20, 24) enthaltenden Schicht als Kreisbogensegmente oder als ebene Flächen ausgeführt sind.

18. Verfahren zur Herstellung einer Polyisobuten-basierten Abdichtung (14, 42) und/oder einer Polyisobuten-basierten Versiegelung (16) gemäß einem der Ansprüche 1 bis 13, **dadurch gekennzeichnet, dass** Polyisobuten (20, 24) eines niedermolekularen, mittelmolekularen oder hochmolekularen Polymerisationsgrads als Feststoff, flüssig, als Dispersion oder als Suspension als Abdichtung und/oder Versiegelung eingesetzt wird.

19. Verfahren gemäß Anspruch 14, **dadurch gekennzeichnet, dass** zur Herstellung einer Polyisobuten-basierten Abdichtung (14, 42) einer Deponiesohle oder Seitenwand bestehender Deponien (30) und/oder kontaminierter Flächen eine Deponieauskleidung (32) durchbohrt wird und unterhalb der Deponieauskleidung (32) durch Hochdruckinjektion Dichtkörper aus Polyisobuten (20, 24) in gegenseitig überlappender Anordnung als Abdichtung der Deponieauskleidung (32) gegenüber dem Erdreich (10) erzeugt werden.

20. Verfahren gemäß Anspruch 14, **dadurch gekennzeichnet, dass** Polyisobuten (20, 24) im Mehr-Schicht-Auftrag aufgebracht ist, derart, dass die erste Schicht (18) niedrigviskosen Polyisobutens (20) niedrigen Molekulargewichts in das Erdreich (10) eindringt und eine erste Sperre bildet.

21. Verfahren gemäß Anspruch 14, **dadurch gekennzeichnet, dass** eine zweite Schicht (22) Polyisobuten (24) mit höherer Viskosität und höherem Molekulargewicht auf die erste Schicht (18) aufgetragen ist.

22. Verwendung der Polyisobuten-basierten Abdichtung (14, 42) und/oder der Polyisobuten-basierten Versiegelung (16) gemäß einem der Ansprüche 1 bis 13 zur Abdichtung und/oder Versiegelung bestehender oder neu anzulegender Deponien (30), kontaminierter Flächen oder Bauwerke, Baugruben, ins Erdreich verlegter Bauten wie Tiefgaragen, Keller, Tunnel, U-Bahn-Schächte, U-Bahn-Röhren, bergmännischer Betriebe im Über- oder Untertagebau, die mittels Dicht-/Schlitzwänden (42) vor dem Kontakt mit beziehungsweise dem Zufluss von Grund- und/oder Oberflächenwasser zu schützen sind sowie durch Oberflächenversiegelung vor dem Austritt schädlicher Gase.

23. Verwendung der Polyisobuten-basierten Abdichtung (14, 42) und/oder der Polyisobuten-basierten Versiegelung (16) gemäß einem der Ansprüche 1 bis 17 zur Kapselung von Deponien und Lagerstätten radioaktiven Materials und deren Behältnissen in geologischen Formationen.
